# FASCICULE DE BREVET EUROPEEN

(11) **EP 3 076 319 B1**
(45) Date de publication et mention de la délivrance du brevet: **04.12.2019**
(21) Numéro de dépôt: 16160094.5
(22) Date de dépôt: 14.03.2016
(51) Int. Cl.: G06F 21/10, H04W 4/21, H04N 21/41, H04N 21/43, H04N 21/4227, H04N 21/6547, H04N 21/6587

(54) **PROCÉDÉ DE RESTITUTION D'UN CONTENU PARTAGÉ, PROCÉDÉ DE PARTAGE, PRODUITS PROGRAMME D'ORDINATEUR ET DISPOSITIFS CORRESPONDANTS**
VERFAHREN ZUR WIEDERGABE EINES GEMEINSAMEN INHALTS, VERFAHREN ZUM TEILEN, ENTSPRECHENDE COMPUTERPROGRAMMPRODUKT UND SYSTEME
METHOD OF REPRODUCING A SHARED CONTENT, METHOD OF SHARING, COMPUTER PROGRAM PRODUCT AND SYSTEMS CORRESPONDING

(30) Priorité: 30.03.2015 FR 1552652
(43) Date de publication de la demande: 05.10.2016
(73) Titulaire: Orange, 75015 Paris (FR)
(72) Inventeur: AGRO, Roberto, 92340 Bourg la Reine (FR)
(74) Mandataire: Vidon Brevets & Stratégie

(56) Documents cités:
- FR-A1- 2 992 511
- US-A1- 2013 251 329
- US-A1- 2014 325 541

## Description

### 1. DOMAINE DE L'INVENTION

Le domaine de l'invention est celui de la consommation de contenus audio et/ou vidéo sur des terminaux (smartphones, tablettes, ordinateurs, etc.).

Plus précisément, l'invention concerne une technique de restitution d'un contenu partagé entre un premier terminal et un second terminal, le premier terminal étant en cours de lecture du contenu.

Cette technique s'applique notamment, mais non exclusivement, au partage de vidéos sur Internet.

### 2. ARRIÈRE-PLAN TECHNOLOGIQUE

La consommation de vidéos en ligne sur des sites web offrant un service d'hébergement, de partage et de visionnage de vidéo en ligne (par exemple les sites « Youtube » (marque déposée) ou « Dailymotion » (marque déposée)) est croissante et s'accompagne d'une envie de partages et d'échanges entre utilisateurs. De plus, des applications mobiles du type « second écran », synchronisées avec la vidéo, permettent d'enrichir l'expérience par des contenus supplémentaires, des quizz et des sondages. Un des cas d'usage consiste en un « canapé virtuel étendu » qui implique qu'un utilisateur invite d'autres à se synchroniser avec la vidéo et à échanger via une discussion (« chat » en anglais) ou une application « second écran » (quizz, jeux concours...).

Il est connu de définir un espace partagé dans lequel un contenu est joué (par exemple une vidéo), chaque participant se connectant à l'espace pour voir la vidéo. Par conséquent, sauf délais de transmission différents, chaque participant voit le même instant de la vidéo au même moment.

Un inconvénient de cette solution connue est que si l'un des participants veut faire une action sur le contenu (comme revoir un passage), tous les participants en bénéficient, ce qui n'est pas toujours souhaitable.

Un autre inconvénient de cette solution connue de visualisation synchronisée d'un contenu est qu'elle nécessite la gestion d'un espace partagé, avec un protocole particulier et un réseau managé, incompatible avec des contenus disponibles sur Internet (par exemple sur les sites « Youtube » (marque déposée) ou « Dailymotion » (marque déposée)) et un délai de transmission non garanti.

Le document de brevet US 2013/251329 divulgue une méthode pour synchroniser la lecture d'un même contenu sur plusieurs appareils.

Le document de brevet FR 2 992 511 divulgue une méthode permettant à des utilisateurs de se connecter les uns aux autres pour partager des contenus.

Le document de brevet US 2014/325541 divulgue une méthode permettant de reproduire des contenus synchronisés au niveau d'une pluralité d'appareils.

### 3. EXPOSÉ DE L'INVENTION

Dans un mode de réalisation particulier de l'invention, il est proposé un procédé de restitution, par un second terminal, d'un contenu partagé par un premier terminal avec le second terminal, le premier terminal étant en cours de lecture du contenu. Le procédé de restitution comprend une lecture par le second terminal du contenu à partir d'une position temporelle effective PTE au sein du contenu, la position temporelle effective étant déterminée comme la position temporelle du contenu lue par le premier terminal à l'instant T1 où un serveur reçoit une première requête, le second terminal ayant transmis au serveur la première requête suite à une réception d'une invitation du premier terminal à partager la lecture du contenu, la première requête étant une requête d'obtention d'une position temporelle de début de lecture du contenu.

Le principe général de la solution proposée consiste donc à déclencher la lecture du contenu sur le second terminal (invité) à partir d'une position temporelle particulière au sein du contenu, appelée position temporelle effective. Cette position temporelle effective est définie comme la position temporelle (c'est-à-dire l'instant) du contenu lue par le premier terminal à l'instant où le serveur a reçu la première requête (c'est-à-dire la requête par laquelle le second terminal demande au serveur de lui fournir la position temporelle de début de lecture du contenu).

Ainsi, la solution proposée repose sur une approche tout à fait nouvelle et inventive, permettant un partage de lecture d'un contenu à une position temporelle (c'est-à-dire un instant) donnée du contenu, sans nécessiter la gestion d'un espace partagé, et donc sans contrainte réseau. La solution proposée fonctionne donc avec des contenus en ligne classiques comme ceux disponibles sur des sites web de type « Youtube » (marque déposée) ou « Dailymotion » (marque déposée).

En outre, une fois la position temporelle effective récupérée par le second terminal (ou plus généralement n'importe quel terminal invité), la solution proposée permet à(aux) utilisateur(s) de chacun des terminaux (celui qui invite comme ceux qui sont invités) de se déplacer dans le contenu (avant/arrière) à sa guise, sans impacter les autres terminaux.

La solution proposée permet le partage entre deux terminaux d'un même utilisateur ou d'utilisateurs distincts : donc, non seulement le partage d'un contenu par un utilisateur avec un autre utilisateur mais aussi le partage d'un terminal avec un autre terminal d'un même utilisateur (qui peut ainsi changer d'écran).

Selon une caractéristique particulière, le procédé de restitution comprend, préalablement à la lecture, une comparaison par le second terminal de la position temporelle effective PTE avec la durée D du contenu, et la lecture est effectuée par le second terminal seulement si PTE < D.

Ainsi, le second terminal vérifie aisément que le second terminal n'a pas trop tardé à accepter l'invitation du premier terminal, notamment que l'utilisateur du second terminal n'a pas trop attendu avant d'accepter l'invitation de l'utilisateur du premier terminal (et donc tenter d'accéder au contenu).

Selon une caractéristique particulière, si PTE ≥ D, la comparaison est suivie d'une fourniture par le second terminal, via une interface homme-machine, d'un message indiquant que le premier terminal a cessé de lire le contenu et/ou qu'une lecture partagée est impossible.

Dans un autre mode de réalisation de l'invention, il est proposé un procédé de détermination, par un serveur, d'une position temporelle effective au sein d'un contenu partagé par un premier terminal avec un second terminal, le premier terminal étant en cours de lecture du contenu. Le procédé de détermination comprend une transmission par le serveur au second terminal d'une réponse à une première requête du second terminal, la réponse contenant, comme position temporelle de début de lecture du contenu, une position temporelle effective PTE au sein du contenu, la position temporelle effective étant déterminée comme la position temporelle du contenu lue par le premier terminal à l'instant T1 où le serveur reçoit, du second terminal, la première requête, le second terminal ayant transmis au serveur la première requête suite à une réception d'une invitation du premier terminal à partager la lecture du contenu, la première requête étant une requête d'obtention d'une position temporelle de début de lecture du contenu.

Selon une caractéristique particulière, le procédé de détermination comprend une détermination par le serveur de ladite position temporelle effective PTE.

Selon une caractéristique particulière, le procédé de détermination comprend :
- une réception par le serveur d'une seconde requête transmise par le premier terminal afin d'indiquer un souhait de partager le contenu, la seconde requête ayant comme paramètres une adresse du contenu, une durée D du contenu et une position temporelle courante PTC de lecture du contenu par le premier terminal ;
- un stockage par le serveur, en association avec un identifiant, des paramètres de la seconde requête et d'une information d'horodatage indiquant l'instant T2 de réception de la seconde requête par le serveur ;
et le serveur détermine ladite position temporelle effective selon la formule suivante : PTE = (T1 - T2) + PTC.

De cette manière, le serveur peut aisément calculer la position temporelle effective.

Selon une caractéristique particulière, le stockage est suivi d'une transmission du serveur au premier terminal d'une réponse à ladite seconde requête contenant ledit identifiant, ladite invitation et ladite première requête ayant en paramètre ledit identifiant.

Ainsi, l'identifiant permet de faire le lien entre le serveur, le premier terminal et le second terminal, dans leurs échanges relatifs au partage du contenu.

Selon une caractéristique particulière, la réponse à la première requête contient également l'adresse du contenu et la durée D du contenu.

Selon une caractéristique particulière, la détermination de la position temporelle effective PTE est suivie d'une comparaison par le serveur de la position temporelle effective PTE avec la durée D du contenu, et en ce que la transmission de la réponse à la première requête est exécutée seulement si PTE < D.

Ainsi, le serveur vérifie aisément que le second terminal n'a pas trop tardé à accepter l'invitation du premier terminal (et donc tenter d'accéder au contenu). En outre, la lecture par le second terminal est exécutée seulement si PTE < D (c'est-à-dire seulement si le second terminal reçoit la réponse à la première requête).

Selon une caractéristique particulière, si PTE ≥ D, le procédé de détermination comprend une transmission par le serveur au second terminal d'un message indiquant que le premier terminal a cessé de lire le contenu et/ou qu'une lecture partagée est impossible.

Dans un autre mode de réalisation de l'invention, il est proposé un procédé de partage d'un contenu entre un premier terminal et un second terminal, le premier terminal étant en cours de lecture du contenu. Le procédé de partage comprend une transmission par le premier terminal au second terminal d'une invitation à partager la lecture du contenu, l'invitation permettant au second terminal de lire le contenu à partir d'une position temporelle effective PTE au sein du contenu déterminée, sur une première requête du second terminal, comme la position temporelle du contenu lue par le premier terminal à l'instant T1 où un serveur a reçu ladite première requête.

Dans un autre mode de réalisation de l'invention, il est proposé un produit programme d'ordinateur, comprenant des instructions de code de programme pour la mise en œuvre du procédé de restitution, par le second terminal, lorsque ledit programme est exécuté sur un ordinateur.

Dans un autre mode de réalisation de l'invention, il est proposé un produit programme d'ordinateur, comprenant des instructions de code de programme pour la mise en œuvre du procédé de détermination, par le serveur, lorsque ledit programme est exécuté sur un ordinateur.

Dans un autre mode de réalisation de l'invention, il est proposé un produit programme d'ordinateur, comprenant des instructions de code de programme pour la mise en œuvre du procédé de partage, par le premier terminal, lorsque ledit programme est exécuté sur un ordinateur.

Dans un autre mode de réalisation de l'invention, il est proposé un ou plusieurs média de stockage lisibles par ordinateur et non transitoire, stockant au moins un des produits programmes d'ordinateur précités.

Dans un autre mode de réalisation de l'invention, il est proposé un second terminal, configuré pour la restitution d'un contenu partagé par un premier terminal avec le second terminal, le premier terminal étant en cours de lecture du contenu. Le second comprend des moyens de lecture du contenu à partir d'une position temporelle effective PTE au sein du contenu, la position temporelle effective étant déterminée comme la position temporelle du contenu lue par le premier terminal à l'instant T1 où un serveur reçoit une première requête, le second terminal ayant transmis au serveur la première requête suite à une réception d'une invitation du premier terminal à partager la lecture du contenu, la première requête étant une requête d'obtention d'une position temporelle de début de lecture du contenu.

Dans un autre mode de réalisation de l'invention, il est proposé un serveur, configuré pour la détermination d'une position temporelle effective au sein d'un contenu partagé par un premier terminal avec un second terminal, le premier terminal étant en cours de lecture du contenu. Le serveur comprend des moyens de transmission au second terminal d'une réponse à une première requête du second terminal, la réponse contenant, comme position temporelle de début de lecture du contenu, une position temporelle effective PTE au sein du contenu, la position temporelle effective étant déterminée comme la position temporelle du contenu lue par le premier terminal à l'instant T1 où le serveur reçoit, du second terminal, la première requête, le second terminal ayant transmis au serveur la première requête suite à une réception d'une invitation du premier terminal à partager la lecture du contenu, la première requête étant une requête d'obtention d'une position temporelle de début de lecture du contenu.

Dans un autre mode de réalisation de l'invention, il est proposé un premier terminal configuré pour le partage d'un contenu avec un second terminal, le premier terminal étant en cours de lecture du contenu. Le premier terminal comprend des moyens de transmission au second terminal d'une invitation à partager la lecture du contenu, l'invitation permettant au second terminal de lire le contenu à partir d'une position temporelle effective PTE au sein du contenu déterminée, sur une première requête du second terminal, comme la position temporelle du contenu lue par le premier terminal à l'instant T1 où un serveur a reçu ladite première requête.

### 4. LISTE DES FIGURES

D'autres caractéristiques et avantages de l'invention apparaîtront à la lecture de la description suivante, donnée à titre d'exemple indicatif et non limitatif, et des dessins annexés, dans lesquels :
- la figure 1 présente un diagramme de séquence illustrant un procédé de restitution d'un contenu partagé, selon un premier mode de réalisation particulier de l'invention ;
- la figure 2 présente un diagramme de séquence illustrant un procédé restitution d'un contenu partagé, selon un second mode de réalisation particulier de l'invention ; et
- la figure 3 présente la structure de chacun des trois dispositifs suivants : serveur, premier terminal et second terminal, selon un mode de réalisation particulier de l'invention.

### 5. DESCRIPTION DÉTAILLÉE

Sur toutes les figures du présent document, les étapes identiques sont désignées par une même référence numérique.

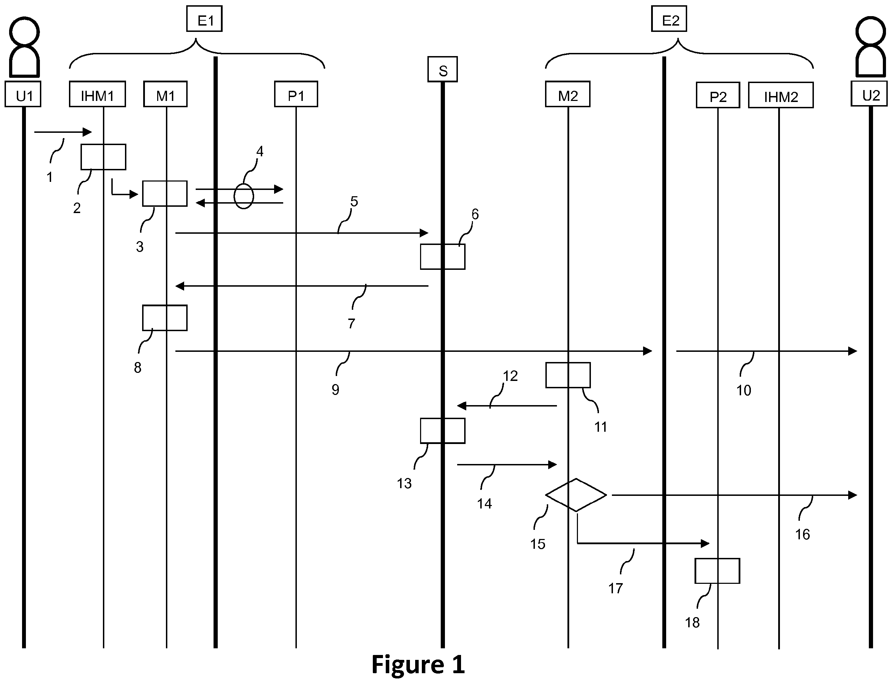

On présente maintenant, en relation avec la **figure 1****,** un procédé de restitution d'un contenu partagé selon un premier mode de réalisation particulier de l'invention.

Ce procédé est mis en œuvre dans un système comprenant notamment un premier terminal E1, un second terminal E2, et un serveur S de gestion de positions temporelles de lecture (aussi appelé « Playback Position Server » en anglais). Par exemple, le premier terminal E1 est un terminal d'un premier utilisateur U1 et le second terminal E2 est le terminal d'un second utilisateur U2.

Dans une première mise en œuvre, le premier utilisateur et le second utilisateur sont deux personnes distinctes.

Dans une deuxième mise en œuvre particulière, le premier utilisateur et le second utilisateur sont une seule et même personne. En d'autres termes, le premier terminal et le second terminal sont utilisés par un même utilisateur. Ceci permet à cet utilisateur de commencer la lecture d'un contenu sur son premier terminal, puis d'inviter son deuxième terminal (et/ou celui d'au moins un autre utilisateur) à se joindre à cette lecture du contenu.

Ainsi, la solution proposée permet le partage entre deux terminaux d'un même utilisateur ou d'utilisateurs distincts : donc, non seulement le partage d'un contenu par un utilisateur avec un autre utilisateur mais aussi le partage d'un terminal avec un autre terminal d'un même utilisateur (qui peut ainsi changer d'écran).

Le contenu est par exemple un contenu audio et/ou vidéo (film, diaporama...) pouvant être consommé via un protocole permettant la recherche (« seek ») au sein du contenu, c'est-à-dire la capacité à se positionner à un instant précis (i.e. une position temporelle précise) du contenu (par exemple le protocole « http » ou le protocole « adaptive streaming »).

Les terminaux E1, E2 sont par exemple des smartphones, des tablettes ou des ordinateurs.

Dans l'exemple présenté ci-après, chaque terminal E1, E2 comprend notamment :
- une interface homme-machine IHM1, IHM2 ;
- un lecteur de contenu (ou « player » en anglais) P1, P2, qui typiquement est une application s'exécutant sur le système d'exploitation du terminal ; et
- un module M1, M2, qui comprend au moins un composant logiciel et/ou matériel.

Le terme "module" peut correspondre dans la présente description aussi bien à un composant logiciel, qu'à un composant matériel ou à un ensemble de composants matériels et logiciels.

Un composant logiciel correspond à un ou plusieurs programmes d'ordinateur, un ou plusieurs sous-programmes d'un programme, ou de manière plus générale à tout élément d'un programme ou d'un logiciel apte à mettre en œuvre une fonction ou un ensemble de fonctions, selon ce qui est décrit ci-dessous pour le module concerné. Un tel composant logiciel est exécuté par un processeur de données du terminal (entité physique) et est susceptible d'accéder aux ressources matérielles du terminal (mémoires, supports d'enregistrement, bus de communication, cartes électroniques d'entrées/sorties, interfaces utilisateur, etc.).

Un composant matériel correspond à tout élément d'un ensemble matériel (ou hardware) apte à mettre en œuvre une fonction ou un ensemble de fonctions, selon ce qui est décrit ci-dessous pour le module concerné. Il peut s'agir d'un composant matériel programmable ou avec processeur intégré pour l'exécution de logiciel, par exemple un circuit intégré, une carte à puce, une carte à mémoire, une carte électronique pour l'exécution d'un micrologiciel (firmware), etc.

Dans la suite de la description, on suppose à titre d'exemple que le premier terminal E1 partage un contenu C avec un second terminal E2, notamment lorsqu'un utilisateur U1 souhaite partager le contenu C avec le second utilisateur U2. On suppose également que le premier terminal E1 (et plus précisément le lecteur P1 de celui-ci) est en cours de lecture du contenu C, permettant notamment au premier utilisateur U1 d'être en cours de consommation du contenu C. On suppose enfin que le contenu C est défini par sa durée « C_duration » et son adresse « C_URL ».

Le premier utilisateur U1 déclenche (étape référencée 1) sur l'interface homme-machine IHM1 du premier terminal E1 une fonction d'invitation de visionnage de contenu, et choisit (étape référencée 2) un ou plusieurs terminaux, notamment en choisissant un ou plusieurs utilisateurs (dont le second utilisateur U2), qu'il souhaite inviter à visionner le contenu C (à la même position temporelle, c'est-à-dire au même instant, de ce contenu C, que lui).

Le module M1 du premier terminal E1 récupère (étape référencée 3) la position temporelle courante du visionnage du contenu C auprès du lecteur P1 du premier terminal E1 (grâce à un échange de messages symbolisé par le couple de flèches référencé 4). La position temporelle courante est désignée par « Initial_Playback_Position_U1 ».

Afin d'indiquer le souhait de partager le contenu C, le module M1 envoie (étape référencée 5) une requête « set_Playback_Position » au serveur S, avec en paramètres : la position temporelle courante « Initial_Playback_Position_U1 », ainsi que l'adresse « C_URL » et la durée « C_Duration » du contenu C.

Le serveur S stocke (étape référencée 6), en association avec un identifiant unique (« Playback_Position_U1_ID »), ces trois paramètres ainsi qu'une information d'horodatage (« Initial_Request_timestamp ») indiquant l'instant de réception de la requête « set_Playback_Position » par le serveur. En d'autres termes, le serveur crée une entrée dans une base de données, stockant les trois paramètres et l'information d'horodatage.

Le serveur retourne (étape référencée 7) une réponse à cette requête, contenant l'identifiant « Playback_Position_U1_ID ». Dans une variante, la réponse est une adresse URL (« Playback_Position_U1_URL ») incluant l'identifiant « Playback_Position_U1_ID ».

Le module M1 reçoit cette réponse et récupère l'adresse « Playback_Position_U1_URL » ou la construit à partir de l'identifiant « Playback_Position_U1_ID » (étape référencée 8).

Le module M1 transmet (étape référencée 9) aux terminaux des utilisateurs sélectionnés par le premier terminal E1, notamment par l'utilisateur U1 sur l'interface homme-machine IHM1 du premier terminal E1, dont le second terminal E2, cette adresse URL (en tant que paramètre d'une invitation de partage de contenu). La transmission peut se faire de différentes manières (SMS, réseaux sociaux, notification de type push, protocole particulier...).

Le second terminal E2 informe (étape référencée 10) le second utilisateur U2 de l'invitation du premier utilisateur U1, selon le choix de partage (publication sur réseaux sociaux, réception de SMS ou d'email...).

Si le second utilisateur accepte l'invitation (via l'interface homme-machine IHM2), le module M2 du second terminal E2 récupère (étape référencée 11) l'adresse « Playback_Position_U1_URL » et de là l'identifiant « Playback_Position_U1_ID », puis transmet (étape référencée 12) une requête « get_Playback_Position » au serveur S, avec en paramètre cet identifiant, afin d'obtenir une position temporelle de début de lecture du contenu C.

Le serveur reçoit la requête « get_Playback_Position » et calcule (étape référencée 13) une position temporelle effective (« Current_Playback_Position_U1 ») qu'il renvoie (étape référencée 14) dans sa réponse. La réponse contient également l'adresse « C_URL » et la durée « C_Duration » du contenu C.

La position temporelle effective (« Current_Playback_Position_U1 ») est définie comme la position temporelle du contenu C lue par le premier terminal E1 à l'instant où le serveur a reçu la requête « get_Playback_Position ». Le serveur détermine la position temporelle effective selon la formule suivante :
Current_Playback_Position_U1 = (T1 - T2) + Initial_Playback_Position_U1, avec :
- T1 l'instant de réception de la requête « get_Playback_Position » par le serveur,
- T2 l'instant de réception de la requête « set_Playback_Position » par le serveur (T2 est donné par l'information d'horodatage « Initial_Request_timestamp »).

Comme la position temporelle courante « Initial_Playback_Position_U1 », la position temporelle effective (« Current_Playback_Position_U1 ») est une information temporelle relative (par rapport au début du contenu), et non pas une information d'horodatage absolue.

Après avoir reçu la réponse (et donc récupéré la position temporelle effective « Current_Playback_Position_U1 », ainsi que l'adresse « C_URL » et la durée « C_Duration » du contenu C), le module E2 compare (étape référencée 15) la position temporelle effective (« Current_Playback_Position_U1 ») avec C_Duration.

Si Current_Playback_Position_U1 est supérieur ou égal à C_Duration, le module M2 du second terminal E2 fournit (étape référencée 16) au second utilisateur U2, via l'interface homme-machine IHM2, un message indiquant que le premier terminal a cessé de lire le contenu et/ou qu'une lecture partagée est impossible. Ceci correspond au cas où le second terminal a trop tardé avant d'accepter l'invitation du premier terminal, notamment le second utilisateur U2 a attendu trop longtemps avant d'accepter l'invitation du premier utilisateur (et donc tenter d'accéder au contenu C).

Si Current_Playback_Position_U1 est inférieur à C_Duration, le module M2 du second terminal E2 invoque (étape référencée 17) le lecteur P2 du second terminal E2, en lui fournissant l'adresse « C_URL » du contenu et la position de début de lecture « Current_Playback_Position_U1 ». Le lecteur P2 du second terminal E2 peut alors jouer (étape référencée 18) le contenu C à la position où le lecteur P1 du premier terminal E1 est censé être à ce moment là (avec un léger décalage lié au temps des échanges sur le réseau reliant les deux terminaux E1, E2).

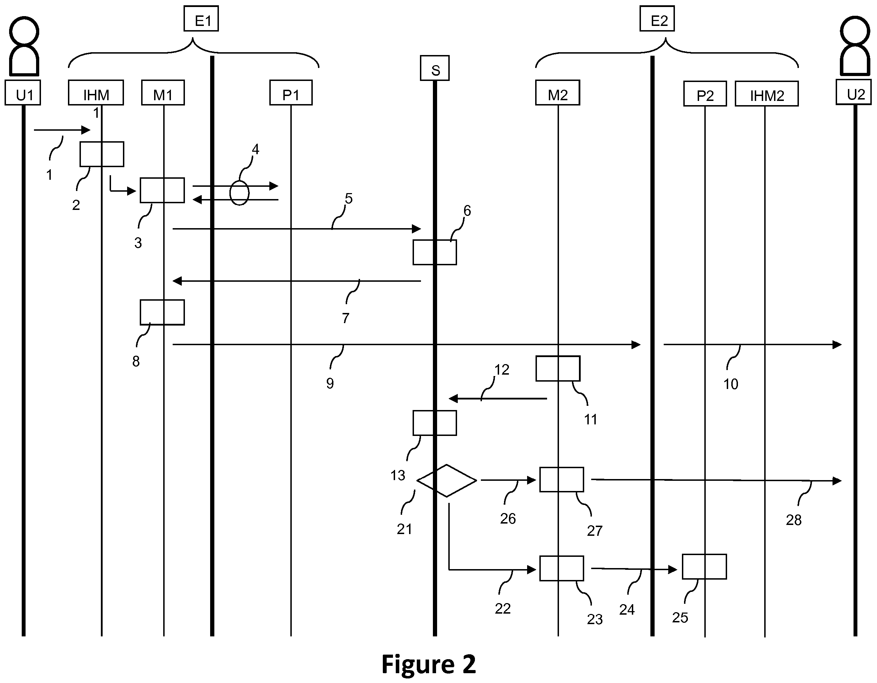

On présente maintenant, en relation avec la **figure 2****,** un procédé de partage de contenu selon un second mode de réalisation particulier de l'invention.

Les étapes 1 à 13 sont identiques à celles du premier mode de réalisation illustré sur la figure 1 et décrit ci-dessus. Ces étapes 1 à 13 ne sont donc pas décrites à nouveau.

Les étapes 14 à 18 de la figure 1 sont remplacées par des étapes 21 à 28, décrites ci-après.

Dans l'étape 21, le serveur compare la position temporelle effective (« Current_Playback_Position_U1 ») avec C_Duration.

Si Current_Playback_Position_U1 est supérieur ou égal à C_Duration, le serveur transmet (étape référencée 26) au module M2 du second terminal E2, en réponse à la requête « get_Playback_Position », un message indiquant que le premier terminal a cessé de lire le contenu et/ou qu'une lecture partagée est impossible. Puis le module M2 reçoit ce message (étape référencée 27) et le fournit (étape référencée 28) au second utilisateur U2, via l'interface homme-machine IHM2.

Si Current_Playback_Position_U1 est inférieur à C_Duration, le serveur envoie (étape référencée 22) au module M2 du second terminal E2, en réponse à la requête « get_Playback_Position », une réponse contenant la position temporelle effective (« Current_Playback_Position_U1 ») ainsi que l'adresse « C_URL » et la durée « C_Duration » du contenu C. Puis le module M2 reçoit cette réponse (étape référencée 23) et invoque (étape référencée 24) le lecteur P2 du second terminal E2, en lui fournissant l'adresse « C_URL » du contenu et la position de début de lecture « Current_Playback_Position_U1 ». Le lecteur P2 du second terminal E2 peut alors jouer (étape référencée 25) le contenu C à la position où le premier terminal E1 est censé être à ce moment-là (avec un léger décalage lié au temps des échanges sur le réseau reliant les deux terminaux E1, E2).

Lors de ces lectures, chacun des terminaux (celui qui invite comme ceux qui sont invités) peut se déplacer dans le contenu (avant/arrière/pause) à sa guise, sans impacter la lecture du contenu par les autres terminaux. Par exemple, lorsque la lecture du contenu par le second terminal est en cours, le lecteur du premier terminal peut commander une pause de la lecture du contenu qui affichera alors une image gelée du contenu à l'instant de pause. Cette commande de pause n'affectera pas la lecture du contenu par le lecteur du deuxième terminal qui continuera à jouer le contenu. Par conséquent, lorsque le premier terminal commandera de continuer la lecture du contenu, le lecteur du premier terminal jouera alors le contenu avec un retard sur le lecteur du deuxième terminal jouant ce même contenu.

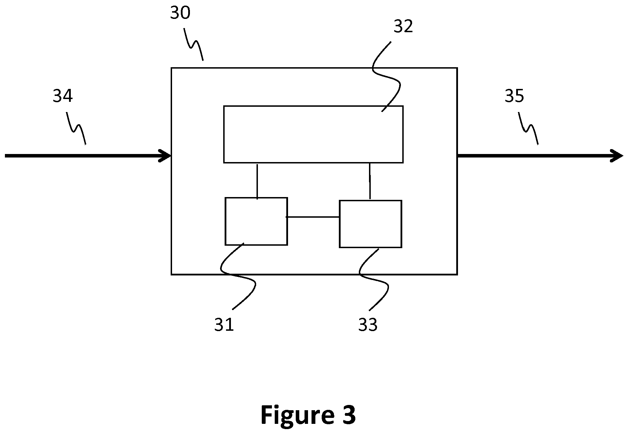

La **figure 3** présente la structure simplifiée de chacun des trois dispositifs suivants : serveur, premier terminal et second terminal, selon un mode de réalisation particulier de l'invention. Ces dispositifs permettent la mise en œuvre du procédé de partage selon l'invention (par exemple selon l'un des modes de réalisation décrits ci-dessus en relation avec les figures 1 et 2). Le dispositif (référencé 30 de manière générique) comprend une mémoire vive 33 (par exemple une mémoire RAM), une unité de traitement 31, équipée par exemple d'un processeur, et pilotée par un programme d'ordinateur stocké dans une mémoire morte 32 (par exemple une mémoire ROM ou un disque dur). A l'initialisation, les instructions de code du programme d'ordinateur sont par exemple chargées dans la mémoire vive 33 avant d'être exécutées par le processeur de l'unité de traitement 31. L'unité de traitement 31 reçoit des signaux d'entrée 34. Le processeur de l'unité de traitement 31 les traite et génère des signaux de sortie 35, selon les instructions du programme 32.

Cette figure 3 illustre seulement une manière particulière, parmi plusieurs possibles, de réaliser les différents algorithmes détaillés ci-dessus, en relation avec les figures 1 et 2. En effet, la technique de l'invention se réalise indifféremment (dans chacun des trois dispositifs : serveur, premier terminal et second terminal) sur une machine de calcul reprogrammable (ordinateur, processeur DSP, microcontrôleur) exécutant un programme comprenant une séquence d'instructions, ou sur une machine de calcul dédiée (par exemple un ensemble de portes logiques comme un FPGA ou un ASIC, ou tout autre module matériel).

Dans le cas d'une implémentation sur une machine de calcul reprogrammable, le programme correspondant (c'est-à-dire la séquence d'instructions) pourra être stocké dans un médium de stockage amovible (tel que par exemple une disquette, un CD-ROM ou un DVD-ROM) ou non, ce médium de stockage étant lisible partiellement ou totalement par un ordinateur ou un processeur.

## Revendications

1. Procédé de restitution, par un second terminal, d'un contenu partagé par un premier terminal (E1) avec le second terminal (E2), le premier terminal étant en cours de lecture du contenu, le procédé comprenant une lecture (18) par le second terminal du contenu à partir d'une position temporelle effective PTE au sein du contenu, la position temporelle effective étant déterminée comme la position temporelle du contenu lue par le premier terminal à l'instant T1 où un serveur reçoit une première requête, le second terminal ayant transmis au serveur la première requête suite à une réception d'une invitation du premier terminal à partager la lecture du contenu, la première requête étant une requête d'obtention d'une position temporelle de début de lecture du contenu, **caractérisé en ce qu'**il comprend, préalablement à la lecture, une comparaison (15) par le second terminal de la position temporelle effective PTE avec la durée D du contenu, et **en ce que** la lecture est effectuée par le second terminal seulement si PTE < D.

2. Procédé selon la revendication 1, **caractérisé en ce que**, si PTE ≥ D, la comparaison est suivie d'une fourniture (16) par le second terminal, via une interface homme-machine, d'un message indiquant que le premier terminal a cessé de lire le contenu et/ou qu'une lecture partagée est impossible.

3. Procédé de détermination, par un serveur, d'une position temporelle effective au sein d'un contenu partagé par un premier terminal (E1) avec un second terminal (E2), le premier terminal étant en cours de lecture du contenu, le procédé comprenant une transmission (14) par le serveur au second terminal d'une réponse à une première requête du second terminal, la réponse contenant, comme position temporelle de début de lecture du contenu, une position temporelle effective PTE au sein du contenu, la position temporelle effective étant déterminée (13) comme la position temporelle du contenu lue par le premier terminal à l'instant T1 où le serveur reçoit, du second terminal, la première requête, le second terminal ayant transmis au serveur la première requête suite à une réception d'une invitation du premier terminal à partager la lecture du contenu, la première requête étant une requête d'obtention d'une position temporelle de début de lecture du contenu,
**caractérisé en ce que** la détermination de la position temporelle effective PTE est suivie d'une comparaison (21) par le serveur de la position temporelle effective PTE avec la durée D du contenu, et **en ce que** la transmission de la réponse à la première requête est exécutée seulement si PTE < D.

4. Procédé selon la revendication 3, **caractérisé en ce qu'**il comprend une détermination (13) par le serveur de ladite position temporelle effective PTE.

5. Procédé selon la revendication 4, **caractérisé en ce qu'**il comprend :
- une réception (5) par le serveur d'une seconde requête transmise par le premier terminal afin d'indiquer un souhait de partager le contenu, la seconde requête ayant comme paramètres une adresse du contenu, une durée D du contenu et une position temporelle courante PTC de lecture du contenu par le premier terminal ;
- un stockage (8) par le serveur, en association avec un identifiant, des paramètres de la seconde requête et d'une information d'horodatage indiquant l'instant T2 de réception de la seconde requête par le serveur ;
et **en ce que** le serveur détermine ladite position temporelle effective selon la formule suivante : PTE = (T1 - T2) + PTC.

6. Procédé selon la revendication 5, **caractérisé en ce que** le stockage est suivi d'une transmission (7) du serveur au premier terminal d'une réponse à ladite seconde requête contenant ledit identifiant, ladite invitation et ladite première requête ayant en paramètre ledit identifiant.

7. Procédé selon l'une quelconque des revendications 3 à 6, **caractérisé en ce que** la réponse à la première requête contient également l'adresse du contenu et la durée D du contenu.

8. Procédé selon la revendication 3, **caractérisé en ce que**, si PTE ≥ D, il comprend une transmission (26) par le serveur au second terminal d'un message indiquant que le premier terminal a cessé de lire le contenu et/ou qu'une lecture partagée est impossible.

9. Produit programme d'ordinateur, comprenant des instructions de code de programme pour la mise en œuvre du procédé selon au moins une des revendications 1 à 2, lorsque ledit programme est exécuté sur un ordinateur.

10. Produit programme d'ordinateur, comprenant des instructions de code de programme pour la mise en œuvre du procédé selon au moins une des revendications 3 à 8, lorsque ledit programme est exécuté sur un ordinateur.

11. Second terminal, configuré pour la restitution d'un contenu partagé par un premier terminal (E1) avec le second terminal (E2), le premier terminal étant en cours de lecture du contenu, le second terminal comprenant des moyens de lecture du contenu à partir d'une position temporelle effective PTE au sein du contenu, la position temporelle effective étant déterminée comme la position temporelle du contenu lue par le premier terminal à l'instant T1 où un serveur reçoit une première requête, le second terminal ayant transmis au serveur la première requête suite à une réception d'une invitation du premier terminal à partager la lecture du contenu, la première requête étant une requête d'obtention d'une position temporelle de début de lecture du contenu,
**caractérisé en ce qu'**il comprend des moyens de comparaison de la position temporelle effective PTE avec la durée D du contenu, et **en ce que** les moyens de lecture sont configurés pour que la lecture soit effectuée seulement si PTE < D.

12. Serveur, configuré pour la détermination d'une position temporelle effective au sein d'un contenu partagé par un premier terminal (E1) avec un second terminal (E2), le premier terminal étant en cours de lecture du contenu, le serveur comprenant des moyens de transmission au second terminal d'une réponse à une première requête du second terminal, la réponse contenant, comme position temporelle de début de lecture du contenu, une position temporelle effective PTE au sein du contenu, la position temporelle effective étant déterminée comme la position temporelle du contenu lue par le premier terminal à l'instant T1 où le serveur reçoit, du second terminal, la première requête, le second terminal ayant transmis au serveur la première requête suite à une réception d'une invitation du premier terminal à partager la lecture du contenu, la première requête étant une requête d'obtention d'une position temporelle de début de lecture du contenu,
**caractérisé en ce qu'**il comprend des moyens de comparaison de la position temporelle effective PTE avec la durée D du contenu, et **en ce que** les moyens de transmission sont configurés pour que la transmission de la réponse à la première requête soit exécutée seulement si PTE < D.

## Patentansprüche

1. Verfahren zur Wiedergabe, durch ein zweites Endgerät, eines Inhalts, der von einem ersten Endgerät (E1) mit dem zweiten Endgerät (E2) geteilt wird, während ein Lesen des Inhalts durch das erste Endgerät erfolgt, wobei das Verfahren ein Lesen (18), durch das zweite Endgerät, des Inhalts ab einer effektiven zeitlichen Position PTE innerhalb des Inhalts umfasst, wobei die effektive zeitliche Position als die zeitliche Position des Inhalts bestimmt wird, die von dem ersten Endgerät zu dem Zeitpunkt T1 gelesen wird, zu dem ein Server eine erste Anfrage empfängt, wobei das zweite Endgerät die erste Anfrage an den Server im Anschluss an einen Empfang einer Einladung des ersten Endgerätes, das Lesen des Inhalts zu teilen, übertragen hat, wobei die erste Anfrage eine Anfrage zum Erhalten einer zeitlichen Position des Beginns des Lesens des Inhalts ist,
**dadurch gekennzeichnet, dass** es vor dem Lesen einen Vergleich (15), durch das zweite Endgerät, der effektiven zeitlichen Position PTE mit der Dauer D des Inhalts umfasst, und dadurch, dass das Lesen durch das zweite Endgerät nur ausgeführt wird, falls PTE < D ist.

2. Verfahren nach Anspruch 1, **dadurch gekennzeichnet, dass**, falls PTE ≥ D ist, auf den Vergleich eine Lieferung (16), durch das zweite Endgerät über eine Mensch-Maschine-Schnittstelle, einer Nachricht folgt, die anzeigt, dass das erste Endgerät aufgehört hat, den Inhalt zu lesen, und/oder dass ein gemeinsames Lesen unmöglich ist.

3. Verfahren zur Bestimmung, durch einen Server, einer effektiven zeitlichen Position innerhalb eines Inhalts, der von einem ersten Endgerät (E1) mit einem zweiten Endgerät (E2) geteilt wird, während ein Lesen des Inhalts durch das erste Endgerät erfolgt, wobei das Verfahren eine Übertragung (14), durch den Server an das zweite Endgerät, einer Antwort auf eine erste Anfrage des zweiten Endgerätes umfasst, wobei die Antwort als zeitliche Position des Beginns des Lesens des Inhalts eine effektive zeitliche Position PTE innerhalb des Inhalts enthält, wobei die effektive zeitliche Position als die zeitliche Position des Inhalts bestimmt wird (13), die von dem ersten Endgerät zu dem Zeitpunkt T1 gelesen wird, zu dem der Server von dem zweiten Endgerät die erste Anfrage empfängt, wobei das zweite Endgerät die erste Anfrage an den Server im Anschluss an einen Empfang einer Einladung des ersten Endgerätes, das Lesen des Inhalts zu teilen, übertragen hat, wobei die erste Anfrage eine Anfrage zum Erhalten einer zeitlichen Position des Beginns des Lesens des Inhalts ist,
**dadurch gekennzeichnet, dass** auf die Bestimmung der effektiven zeitlichen Position PTE ein Vergleich (21), durch den Server, der effektiven zeitlichen Position PTE mit der Dauer D des Inhalts folgt, und dadurch, dass die Übertragung der Antwort auf die erste Anfrage nur ausgeführt wird, falls PTE < D ist.

4. Verfahren nach Anspruch 3, **dadurch gekennzeichnet, dass** es eine Bestimmung (13) der effektiven zeitlichen Position PTE durch den Server umfasst.

5. Verfahren nach Anspruch 4, **dadurch gekennzeichnet, dass** es umfasst:
- einen Empfang (5), durch den Server, einer zweiten Anfrage, die von dem ersten Endgerät übertragen wird, um einen Wunsch anzuzeigen, den Inhalt zu teilen, wobei die zweite Anfrage als Parameter eine Adresse des Inhalts, eine Dauer D des Inhalts und eine aktuelle zeitliche Position PTC des Lesens des Inhalts durch das erste Endgerät aufweist;
- ein Speichern (8), durch den Server in Verbindung mit einer Kennung, der Parameter der zweiten Anfrage und einer Zeitstempelinformation, die den Zeitpunkt T2 des Empfangs der zweiten Anfrage durch den Server angibt;
und dadurch, dass der Server die effektive zeitliche Position gemäß der folgenden Formel bestimmt: PTE = (T1 - T2) + PTC.

6. Verfahren nach Anspruch 5, **dadurch gekennzeichnet, dass** auf die Speicherung eine Übertragung (7), vom Server an das erste Endgerät, einer Antwort auf die zweite Anfrage folgt, welche die Kennung, die Einladung und die erste Anfrage, die als Parameter die Kennung aufweist, enthält.

7. Verfahren nach einem der Ansprüche 3 bis 6, **dadurch gekennzeichnet, dass** die Antwort auf die erste Anfrage auch die Adresse des Inhalts und die Dauer D des Inhalts enthält.

8. Verfahren nach Anspruch 3, **dadurch gekennzeichnet, dass** es, falls PTE ≥ D ist, eine Übertragung (26), durch den Server an das zweite Endgerät, einer Nachricht umfasst, die anzeigt, dass das erste Endgerät aufgehört hat, den Inhalt zu lesen, und/oder dass ein gemeinsames Lesen unmöglich ist.

9. Computerprogrammprodukt, welches Programmcodeanweisungen zur Durchführung des Verfahrens nach wenigstens einem der Ansprüche 1 bis 2, wenn das Programm auf einem Computer ausgeführt wird, umfasst.

10. Computerprogrammprodukt, welches Programmcodeanweisungen zur Durchführung des Verfahrens nach wenigstens einem der Ansprüche 3 bis 8, wenn das Programm auf einem Computer ausgeführt wird, umfasst.

11. Zweites Endgerät, welches für die Wiedergabe eines Inhalts ausgelegt ist, der von einem ersten Endgerät (E1) mit dem zweiten Endgerät (E2) geteilt wird, während ein Lesen des Inhalts durch das erste Endgerät erfolgt, wobei das zweite Endgerät Mittel zum Lesen des Inhalts ab einer effektiven zeitlichen Position PTE innerhalb des Inhalts umfasst, wobei die effektive zeitliche Position als die zeitliche Position des Inhalts bestimmt wird, die von dem ersten Endgerät zu dem Zeitpunkt T1 gelesen wird, zu dem ein Server eine erste Anfrage empfängt, wobei das zweite Endgerät die erste Anfrage an den Server im Anschluss an einen Empfang einer Einladung des ersten Endgerätes, das Lesen des Inhalts zu teilen, übertragen hat, wobei die erste Anfrage eine Anfrage zum Erhalten einer zeitlichen Position des Beginns des Lesens des Inhalts ist,
**dadurch gekennzeichnet, dass** es Mittel zum Vergleich der effektiven zeitlichen Position PTE mit der Dauer D des Inhalts umfasst, und dadurch, dass die Mittel zum Lesen dafür ausgelegt sind, dass das Lesen nur ausgeführt wird, falls PTE < D ist.

12. Server, welcher für die Bestimmung einer effektiven zeitlichen Position innerhalb eines Inhalts ausgelegt ist, der von einem ersten Endgerät (E1) mit einem zweiten Endgerät (E2) geteilt wird, während ein Lesen des Inhalts durch das erste Endgerät erfolgt, wobei der Server Mittel zur Übertragung, an das zweite Endgerät, einer Antwort auf eine erste Anfrage des zweiten Endgerätes umfasst, wobei die Antwort als zeitliche Position des Beginns des Lesens des Inhalts eine effektive zeitliche Position PTE innerhalb des Inhalts enthält, wobei die effektive zeitliche Position als die zeitliche Position des Inhalts bestimmt wird, die von dem ersten Endgerät zu dem Zeitpunkt T1 gelesen wird, zu dem der Server von dem zweiten Endgerät die erste Anfrage empfängt, wobei das zweite Endgerät die erste Anfrage an den Server im Anschluss an einen Empfang einer Einladung des ersten Endgerätes, das Lesen des Inhalts zu teilen, übertragen hat, wobei die erste Anfrage eine Anfrage zum Erhalten einer zeitlichen Position des Beginns des Lesens des Inhalts ist,
**dadurch gekennzeichnet, dass** er Mittel zum Vergleich der effektiven zeitlichen Position PTE mit der Dauer D des Inhalts umfasst, und dadurch, dass die Mittel zur Übertragung dafür ausgelegt sind, dass die Übertragung der Antwort auf die erste Anfrage nur ausgeführt wird, falls PTE < D ist.

## Claims

1. Method of rendering, by a second terminal, of a content shared by a first terminal (E1) with the second terminal (E2), the first terminal being engaged in reading the content, the method comprising a reading (18) by the second terminal of the content from an effective temporal position PTE within the content, the effective temporal position being determined as the content's temporal position read by the first terminal at the instant T1 at which a server receives a first request, the second terminal having transmitted to the server the first request subsequent to a reception of an invitation by the first terminal to share the reading of the content, the first request being a request for obtaining a content reading starting temporal position,
**characterized in that** it comprises, prior to the reading, a comparison (15) by the second terminal of the effective temporal position PTE with the duration D of the content, and **in that** the reading is done by the second terminal only if PTE < D.

2. Method according to Claim 1, **characterized in that**, if PTE ≥ D, the comparison is followed by furnishing(16) by the second terminal, via a man-machine interface, of a message indicating that the first terminal has stopped reading the content and/or that shared reading is impossible.

3. Method of determination, by a server, of an effective temporal position within a content shared by a first terminal (E1) with a second terminal (E2), the first terminal being engaged in reading the content, the method comprising a transmission (14) by the server to the second terminal of a response to a first request of the second terminal, the response containing, as content reading starting temporal position, an effective temporal position PTE within the content, the effective temporal position being determined (13) as the temporal position of the content read by the first terminal at the instant T1 when the server receives, from the second terminal, the first request, the second terminal having transmitted to the server the first request subsequent to a reception of an invitation from the first terminal to share the reading of the content, the first request being a request for obtaining a content reading starting temporal position, **characterized in that** the determination of the effective temporal position PTE is followed by a comparison (21) by the server of the effective temporal position PTE with the duration D of the content, and **in that** the transmission of the response to the first request is executed only if PTE < D.

4. Method according to Claim 3, **characterized in that** it comprises a determination (13) by the server of said effective temporal position PTE.

5. Method according to Claim 4, **characterized in that** it comprises:
- a reception (5) by the server of a second request transmitted by the first terminal so as to indicate a wish to share the content, the second request having as parameters an address of the content, a duration D of the content and a current temporal position PTC of reading of the content by the first terminal;
- a storage (8) by the server, in association with an identifier, of the parameters of the second request and of a time-stamping information item indicating the instant T2 of reception of the second request by the server;
and **in that** the server determines said effective temporal position according to the following formula: PTE = (T1 - T2) + PTC.

6. Method according to Claim 5, **characterized in that** the storage is followed by a transmission (7) from the server to the first terminal of a response to said second request containing said identifier, said invitation and said first request having said identifier as parameter.

7. Method according to any one of Claims 3 to 6, **characterized in that** the response to the first request also contains the address of the content and the duration D of the content.

8. Method according to Claim 3, **characterized in that**, if PTE ≥ D, it comprises a transmission (26) by the server to the second terminal of a message indicating that the first terminal has stopped reading the content and/or that shared reading is impossible.

9. Computer program product, comprising program code instructions for the implementation of the method according to at least one of Claims 1 to 2, when said program is executed on a computer.

10. Computer program product, comprising program code instructions for the implementation of the method according to at least one of Claims 3 to 8, when said program is executed on a computer.

11. Second terminal, configured for the rendering of a content shared by a first terminal (E1) with the second terminal (E2), the first terminal being engaged in reading the content, the second terminal comprising means for reading the content from an effective temporal position PTE within the content, the effective temporal position being determined as the temporal position of the content read by the first terminal at the instant T1 when a server receives a first request, the second terminal having transmitted to the server the first request subsequent to a reception of an invitation of the first terminal to share the reading of the content, the first request being a request for obtaining a content reading starting temporal position, **characterized in that** it comprises means for comparing the effective temporal position PTE with the duration D of the content, and **in that** the reading means are configured so that the reading only if PTE < D.

12. Server, configured for the determination of an effective temporal position within a content shared by a first terminal (E1) with a second terminal (E2), the first terminal being engaged in reading the content, the server comprising means for transmitting to the second terminal a response to a first request of the second terminal, the response containing, as content reading starting temporal position, an effective temporal position PTE within the content, the effective temporal position being determined as the content's temporal position read by the first terminal at the instant T1 when the server receives, from the second terminal, the first request, the second terminal having transmitted to the server the first request subsequent to a reception of an invitation of the first terminal to share the reading of the content, the first request being a request for obtaining a content reading starting temporal position,
**characterized in that** it comprises means for comparing the effective temporal position PTE with the duration D of the content, and **in that** the transmitting means are configured so that the transmission of the response to the first request is executed is done only if PTE < D.
